# EUROPEAN PATENT APPLICATION

(11) **EP 4 435 622 A1**
(43) Date of publication of application: **25.09.2024**
(21) Application number: 23194913.2
(22) Date of filing: 01.09.2023
(51) Int. Cl.: G06F 16/14, G06F 16/16

(54) **INFORMATION PROCESSING SYSTEM, PROGRAM, AND INFORMATION PROCESSING METHOD**

(30) Priority: 20.03.2023 JP 2023043811
(71) Applicant: FUJIFILM Business Innovation Corp., Minato-ku Tokyo (JP)
(72) Inventor: MITSUI, Toshiyuki, Yokohama-shi, Kanagawa (JP)
(74) Representative: Kurig, Thomas

(57) **Abstract**

An information processing system includes a processor configured to: in a case in which a request to display a classification structure for classifying document files into folders that are hierarchically formed on the basis of attribute items of the document files is received, specify a folder in which the document file is stored with reference to attribute information of the document files stored in the folders forming the classification structure; and display only the folder in which the document file is stored among the folders forming the classification structure.

## Description

### BACKGROUND OF THE INVENTION

### (i) Field of the Invention

The present invention relates to an information processing system, a program, and an information processing method.

### (ii) Description of Related Art

In general, files, such as documents, are classified and stored in folders according to, for example, the creator, type, and purpose of use of the file. In a case in which a folder that a user wants to use as a storage destination has not yet been created, for example, the folder is created at that time to respond to this situation.

Meanwhile, in a case in which the file is a document, folders may be created hierarchically in advance for each of attribute values of attribute items of the documents, and the document may be classified into a folder that is matched with the attribute value given to the document. As described above, in a case in which a classification structure for classifying document files into folders that are hierarchically formed on the basis of the attribute values of the attribute items of the documents is defined in advance, it is not necessary to create the folder each time the document is stored. In addition, it is possible to arrange and store the documents according to the attribute values.

In the case of this classification structure, the folders are hierarchically created according to the attribute items of the documents. For example, JP4794709B discloses a technique that sets priorities to attribute items and hierarchically displays folders according to the priorities.

### SUMMARY OF THE INVENTION

In the classification structure for classifying document files into the folders that are hierarchically formed on the basis of the attribute items of the document files, as the number of attribute items used to classify the documents is larger, the folders are formed in a deeper hierarchical structure. Further, in a case in which a large number of attribute values are acquired for one attribute item, the folders are widely expanded in a horizontal direction, that is, in the same hierarchy. Then, not all of the folders included in the classification structure can be displayed on a screen. In addition, the folder that is not planned to be referred to because documents have not yet been stored is also set as an object to be displayed. Therefore, in some cases, it is necessary to perform, for example, an operation of scrolling the screen up, down, right, and left to find the folder in which the document that the user wants to access is stored. Alternatively, it is also considered that the folder, in which a document has not yet been stored, is set to be excluded from the object to be displayed. However, it is troublesome to manually perform the setting.

An object of the present invention is to provide a technique that, in a case in which a classification structure for classifying document files into folders that are hierarchically formed on the basis of attribute items of the document files is displayed, can easily control display of useless folders as compared to a case in which a user manually sets folders.

According to an aspect of the present disclosure, there is provided an information processing system including a processor configured to: in a case in which a request to display a classification structure for classifying document files into folders that are hierarchically formed on the basis of attribute items of the document files is received, specify a folder in which the document file is stored with reference to attribute information of the document files stored in the folders forming the classification structure; and display only the folder in which the document file is stored among the folders forming the classification structure.

In addition, the processor may be configured to: display a folder that does not have the document file stored therein, but corresponds to an attribute value matched with a predetermined condition.

Further, the predetermined condition may be that the attribute value of the attribute item of the document file indicates a period.

Furthermore, the predetermined condition may be that the attribute value of the attribute item of the document file is a phrase indicating a phase.

Moreover, the processor may be configured to: analyze the attribute value of the attribute item of the document file stored in the folder forming the classification structure and a storage date and time of the document file in the folder to determine whether or not the attribute value is the phrase indicating the phase.

In addition, the processor may be configured to: in a case in which the attribute value of the attribute item of the document file indicates the period, display a display element for switching display of a subfolder of a folder that corresponds to an attribute value indicating a latest period among the attribute values of the attribute items in association with the folder.

Further, the processor may be configured to: display the subfolder of the folder corresponding to the attribute value indicating the latest period in response to a user's operation of selecting the display element.

Furthermore, the processor may be configured to: in a case in which the document file is not stored in the subfolder, exclude the subfolder from an object to be displayed.

Moreover, the processor may be configured not to display the subfolder of the folder corresponding to the attribute value indicating the latest period in response to a user's operation of selecting the display element.

According to another aspect of the present disclosure, there is provided a program causing a computer to implement: a function of specifying a folder in which the document file is stored with reference to attribute information of the document files stored in the folders forming the classification structure, in a case in which a request to display a classification structure for classifying document files into folders that are hierarchically formed on the basis of attribute items of the document files is received; and a function of displaying only the folder in which the document file is stored among the folders forming the classification structure.

According to another aspect of the present disclosure, there is provided an information processing method including: specifying a folder in which the document file is stored with reference to attribute information of the document files stored in the folders forming the classification structure, in a case in which a request to display a classification structure for classifying document files into folders that are hierarchically formed on the basis of attribute items of the document files is received; and displaying only the folder in which the document file is stored among the folders forming the classification structure.

According to a first aspect, in a case in which the classification structure for classifying the document files into the folders that are hierarchically formed on the basis of the attribute items of the document files is displayed, it is possible to easily control the display of useless folders as compared to a case in which the user manually sets folders.

According to a second aspect, it is possible to set, as the object to be displayed, the folder that does not have the document file stored therein, but is considered to be necessary for the user.

According to a third aspect, it is possible to display the folder corresponding to the latest attribute value.

According to a fourth aspect, it is possible to collectively display the folders corresponding to the phase.

According to a fifth aspect, it is possible to automatically determine whether or not the phrase indicates the phase.

According to a sixth aspect, only the selection of the display element by the user makes it possible to switch between the display and non-display of the subfolder of the folder that corresponds to the attribute value indicating the latest period.

According to a seventh aspect, it is possible to display the subfolder of the folder that corresponds to the attribute value indicating the latest period regardless of whether or not the document file is stored.

According to an eighth aspect, among the subfolders of the folder that corresponds to the attribute value indicating the latest period, it is possible not to display the subfolder in which the document file is not stored.

According to a ninth aspect, it is possible not to display the subfolder of the folder that corresponds to the latest attribute value.

According to a tenth aspect, in a case in which the classification structure for classifying the document files into the folders that are hierarchically formed on the basis of the attribute items of the document files is displayed, it is possible to easily control the display of useless folders as compared to a case in which the user manually sets folders.

According to an eleventh aspect, in a case in which the classification structure for classifying the document files into the folders that are hierarchically formed on the basis of the attribute items of the document files is displayed, it is possible to easily control the display of useless folders as compared to a case in which the user manually sets folders.

### BRIEF DESCRIPTION OF THE DRAWINGS

Exemplary embodiment(s) of the present invention will be described in detail based on the following figures, wherein:
Fig. 1 is a block diagram showing an information processing system according to an exemplary embodiment of the present invention;
Fig. 2A is a flowchart showing a classification structure display process according to the present exemplary embodiment;
Fig. 2B is a flowchart following Fig. 2A;
Fig. 2C is a flowchart following Fig. 2A;
Fig. 3 is a diagram showing an example of a data configuration of classification structure information stored in a classification structure information storage unit in the present exemplary embodiment and the number of folders formed according to the classification structure information;
Fig. 4 is a diagram schematically showing a part of an example of display in a case in which a classification structure defined by the classification structure information shown in Fig. 3 is displayed;
Fig. 5 is a diagram showing the number of folders displayed in a case in which the present exemplary embodiment is applied to the same classification structure information as the classification structure information shown in Fig. 3;
Fig. 6 is a diagram schematically showing an example of display in a case in which the present exemplary embodiment is applied and a classification structure defined by the classification structure information shown in Fig. 5 is displayed;
Fig. 7 is a diagram showing an example of the display of a display tree in a case in which the classification structure is displayed in the present exemplary embodiment;
Fig. 8 is a diagram showing an example of the display of a part of the display tree in a case in which the classification structure is displayed in the present exemplary embodiment;
Fig. 9 is a diagram showing an example of the display of the display tree in a case in which the classification structure is displayed in the present exemplary embodiment; and
Figs. 10A and 10B are diagrams showing examples of the display of the display tree in a case in which the classification structure is displayed in the present exemplary embodiment.

### DETAILED DESCRIPTION OF THE INVENTION

Hereinafter, an exemplary embodiment of the present invention will be described with reference to the drawings.

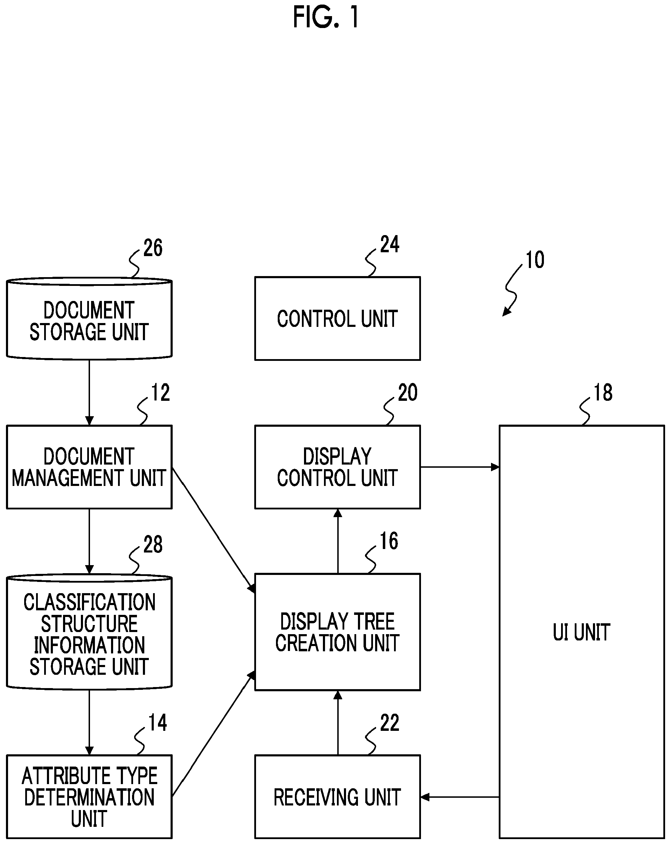

Fig. 1 is a block diagram showing an information processing system according to an exemplary embodiment of the present invention. The information processing system according to the present exemplary embodiment can be implemented by one or more information processing apparatuses. In the following description, a case in which the information processing system is implemented by one information processing apparatus will be described as an example.

An information processing apparatus 10 according to the present exemplary embodiment can be implemented by an existing general-purpose hardware configuration such as a personal computer (PC). That is, the information processing apparatus 10 according to the present exemplary embodiment can be implemented by a configuration including a user interface that includes a CPU, a storage means, such as a ROM, a RAM, and a hard disk drive (HDD), a communication means, such as a network interface, an input means, such as a mouse and a keyboard, and a display means such as a display.

As shown in Fig. 1, the information processing apparatus 10 according to the present exemplary embodiment includes a document management unit 12, an attribute type determination unit 14, a display tree creation unit 16, a user interface (UI) unit 18, a display control unit 20, a receiving unit 22, and a control unit 24. In addition, the information processing apparatus 10 includes a document storage unit 26 and a classification structure information storage unit 28 as data storage means. In addition, components that are not used in the description of the present exemplary embodiment are omitted in the drawings.

In the present exemplary embodiment, a case in which a data file of an electronic document (hereinafter, also simply referred to as a "document") is handled as a file that is stored and managed in a folder is assumed. The document storage unit 26 stores documents to be processed by the information processing apparatus 10. The classification structure information storage unit 28 stores information (hereinafter, referred to as "classification structure information") for defining a classification structure that is formed according to attribute items of the documents stored in the document storage unit 26.

The document management unit 12 performs the management of the documents stored in the document storage unit 26, for example, the registration, update, and reading out of the documents. In addition, attribute items (hereinafter, also simply referred to as "attributes"), such as a creator, a creation date and time, and a document type, are usually given to the documents. The document management unit 12 manages the classification structure information for defining the classification structure that classifies document files into folders hierarchically formed on the basis of the attribute values of the attributes of the documents stored in the document storage unit 26. Information (the above-mentioned "classification structure information") defining the classification structure defined by the document management unit 12 is stored in the classification structure information storage unit 28.

The attribute type determination unit 14 determines the type of the attribute that is set in the classification structure information stored in the classification structure information storage unit 28. The type of the attribute to be determined will be described below. The display tree creation unit 16 specifies a folder, in which a document is stored, among the folders included in the classification structure defined by the classification structure information stored in the classification structure information storage unit 28 and creates a classification structure including only the specified folder as a display tree. The display tree creation unit 16 creates the classification structure including only the folder, in which the document is stored, as a basic form. However, the display tree creation unit 16 has a function of exceptionally creating a classification structure including a folder in which no documents are stored, which will be described in detail below.

The user interface unit 18 is implemented by the input means and the display means in the information processing apparatus 10, displays a two-dimensional table or the like, and allows the user to perform an input operation on the two-dimensional table or the like displayed on the screen. The display control unit 20 controls the display of the user interface unit 18. The receiving unit 22 receives a user operation on the user interface unit 18. The control unit 24 controls the operations of the components 12 to 22 in the present exemplary embodiment.

Each of the components 12 to 24 of the information processing apparatus 10 is implemented by a cooperative operation of a computer that constitutes the information processing apparatus 10 and a program that is operated by a CPU provided in the computer. In addition, each of the storage units 26 and 28 is implemented by the HDD provided in the information processing apparatus 10. Alternatively, the RAM or an external storage means may be used via a network.

In the present exemplary embodiment, description will be made assuming that the information processing system is implemented by one computer. However, an information processing system in which the components 12 to 24 are distributed and formed in a plurality of computers connected by a communication network may be used. The "system" in the present exemplary embodiment includes both a system that is configured by a plurality of apparatuses and a system that is configured by a single apparatus.

Further, the program used in the present exemplary embodiment can be provided by a communication means. In addition, the program can be stored in a computer-readable recording medium, such as a CD-ROM or a USB memory, and then provided. The programs provided from the communication means or the recording medium are installed in the computer, and the CPU of the computer sequentially executes the programs to implement various processes.

In the classification structure defined by the classification structure information in the present exemplary embodiment, as the number of attributes of the documents is larger, the folders are formed in a deeper hierarchical structure. In addition, as the number of attribute values set for one attribute item is larger, the folders are more widely expanded and formed in the same hierarchy. Therefore, in a case in which the classification structure is displayed, it is not possible to display the entire classification structure on one screen. In particular, folders are formed in the classification structure regardless of whether or not documents are stored. Therefore, in some cases, it is necessary to perform, for example, an operation of scrolling up, down, right, and left in order to find the folder, in which the document that the user wants to access is stored, and to display the document stored in the folder on the screen.

Meanwhile, since a folder in which no documents are stored is basically not an object to be accessed, it is considered that the folder does not need to be displayed on the screen. Therefore, the present exemplary embodiment is characterized in that the folder in which no documents are stored is regarded as a useless folder and the classification structure displayed on the screen includes only the folder in which the document is stored and is displayed.

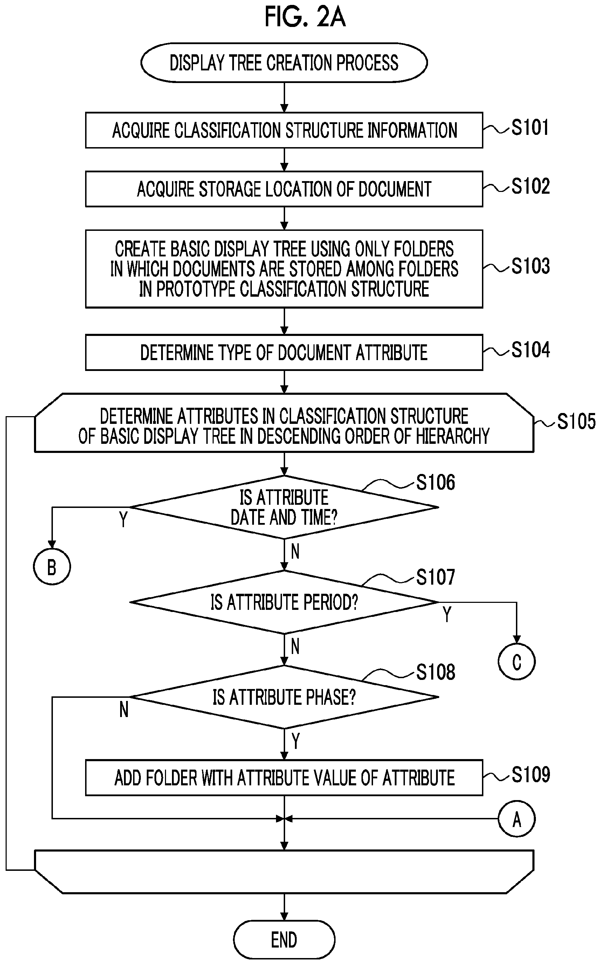

Next, an operation in the present exemplary embodiment will be described. Hereinafter, a classification structure display process according to the present exemplary embodiment will be described with reference to flowcharts shown in Figs. 2A to 2C.

In a case in which the user logs in to the information processing apparatus 10 and performs an operation of displaying the classification structure, the control unit 24 displays the display tree in cooperation with other components 12 to 22 as follows, in response to a display request from the user by the operation. In addition, the user may access the information processing apparatus 10 via a network from an information processing apparatus, such as a user terminal, used by the user. In this case, the user interface unit 18 is provided in the user terminal.

First, the attribute type determination unit 14 reads out and acquires the classification structure information stored in the classification structure information storage unit 28 (Step S101). Then, the document management unit 12 acquires each document stored in the document storage unit 26 and at least the folder that serves as a storage location of the document (Step S102). In addition, either Step S101 or Step S102 may be performed first, or Step S101 and Step S102 may be processed in parallel at the same time.

Then, the display tree creation unit 16 specifies in which folder of the classification structure defined by the classification structure information each document is stored with reference to the storage location of each document. Then, the display tree creation unit 16 specifies a folder in which the document is stored among the folders of the classification structure and creates a classification structure including only the specified folder among the folders forming the classification structure as the basic display tree (Step S103). In addition, in the following description, the classification structure defined by the classification structure information is referred to as a "prototype classification structure", and the classification structure including only the folder in which the document is stored in the present exemplary embodiment is referred to as a "basic display tree". In the present exemplary embodiment, the "display tree" is created by adding the folder, in which no documents are stored, to the basic display tree, which has been created by performing Steps S101 to S103, by the subsequent process as necessary.

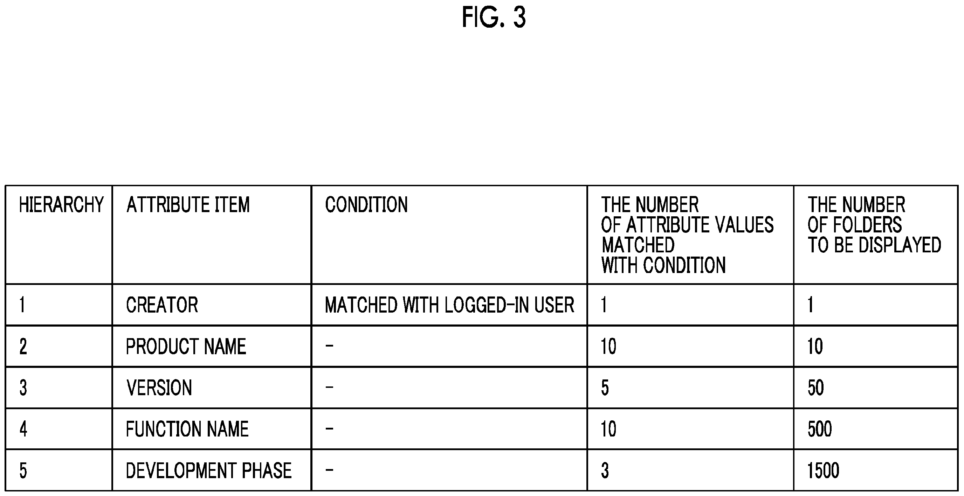

Fig. 3 is a diagram showing an example of a data configuration of the classification structure information stored in the classification structure information storage unit 28 according to the present exemplary embodiment. In the classification structure information according to the present exemplary embodiment, attribute items are defined up to five hierarchies. Then, conditions for displaying the hierarchy are set for each hierarchy in advance. The number of attribute items, and the attribute items and conditions in each hierarchy are set by the user. In the classification structure information shown in Fig. 3, the user selects five attribute items among the attribute items set in the document. However, the number of attribute items set in the classification structure information is not limited thereto and may be two or more, which is necessary to form the hierarchy.

The classification structure is formed by referring to the attribute information of the document according to the attribute items and conditions defined in the classification structure information. The folders forming the classification structure form a hierarchical structure according to the content of the setting of the hierarchy in the classification structure information. Further, the folders forming the classification structure are formed to be expanded in the same hierarchy according to the attribute values that can be set for one attribute item.

In addition, the "number of attribute values matched with conditions" and the "number of folders to be displayed" shown in Fig. 3 are shown as information indicating the difference between the case of the related art and the case of the present exemplary embodiment to be associated with each hierarchy for convenience. Meanwhile, "the number of attribute values matched with conditions" is the number of attribute values that can be set in the document as the attribute values matched with the attributes and conditions. Any attribute value included in the number of attribute values is given as the attribute value of the attribute to the document. In addition, the "number of folders to be displayed" is the number of folders that are formed in the hierarchy and are to be displayed.

According to the classification structure information shown in Fig. 3, the attribute associated with the top of the hierarchy (that is, "hierarchy 1") is the "creator" of the document. In general, a plurality of users can be the creators of the documents. As a condition for the creator, the following is set: only a folder, in which the document created by a logged-in user is stored, and a subfolder of the folder are set as the object to be displayed in response to a display request from the logged-in user. Here, the number of attribute values matched with the logged-in user is 1. Therefore, for hierarchy 1, the total number of folders to be displayed is 1. The attribute associated with a second hierarchy (that is, "hierarchy 2") is a "product name". Since no conditions are set in the "product name", any one of the product names of 10 products is set as the attribute value of the attribute "product name" in the document. The attribute associated with a third hierarchy (that is, "hierarchy 3") is a "version". Since no conditions are set in the "version", any one of five types of versions, for example, from version 1 "V1.0" to version 5 "V5.0" is set as the attribute value of the attribute "version" in the document. The attribute associated with a fourth hierarchy (that is, "hierarchy 4") is a "function name". Since no conditions are set in the "function name", any one of the function names often types of functions is set as the attribute value of the attribute "function name" in the document. The attribute associated with a fifth hierarchy (that is, "hierarchy 5") is a "development phase". Since no conditions are set in the "development phase", any one of three phases is set as the attribute value of the attribute "development phase" in the document. In addition, the "phase" indicates each stage in the flow of a process.

According to the numerical example of the number of attribute values shown in Fig. 3, folders with the product names of 10 products are formed for one user, and folders corresponding to five versions are formed for each product. As described above, in a case in which a classification structure corresponding to one user is displayed, folders are hierarchically formed from hierarchy 1 to hierarchy 5. In this case, the number of folders expanded hierarchically from the top hierarchy becomes enormous. For example, as can be seen from Fig. 3, the number of folders in the development phase located at the lowest hierarchy is 1500.

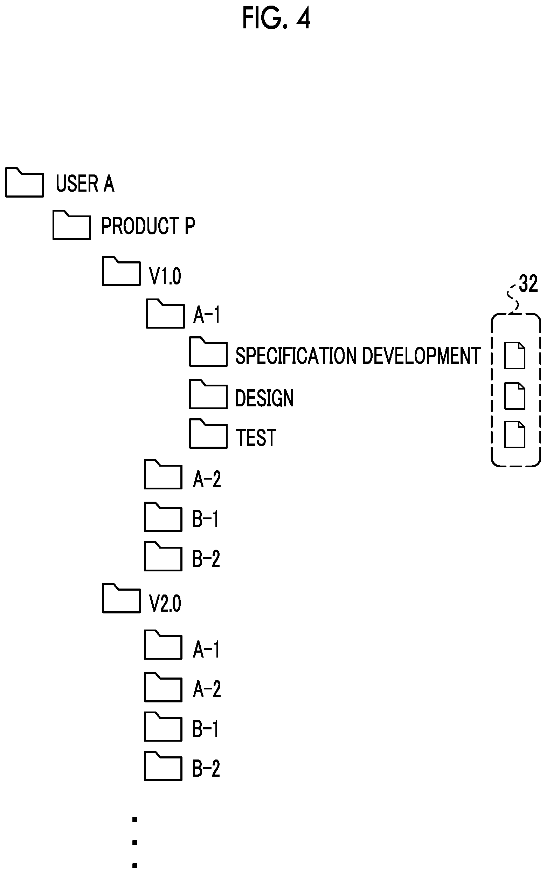

Fig. 4 is a diagram schematically showing a part of an example of display in a case in which the classification structure defined by the classification structure information shown in Fig. 3 is displayed. In addition, Fig. 4 shows a case in which the logged-in user is a "user A". Further, only a part of the prototype classification structure is shown due to space limitations, and it is actually impossible to display 1500 folders forming the classification structure on one screen. Furthermore, in Fig. 4, a document icon 32 is associated with each of the folders corresponding to the development phases "specification development", "design", and "test" in a function name "A-1" in the version "V1.0" as surrounded by dashed lines. Therefore, it can be seen that files are stored in the folders. On the other hand, it can be seen that no documents are stored in the other folders.

Here, it is assumed that the user A is a developer involved in the development of only a product P. Then, it is assumed that the product P of only the version V1.0 has been developed at present, only the function "A-1" is included in the product P of the version V1.0, and documents are stored in the folders "specification development", "design", and "test".

As shown in Fig. 4, for example, even in a case in which functions with function names "A-2", "B-1", "B-2", and the like are not actually installed in the "product P", the folders corresponding to the function names "A-2", "B-1", "B-2", and the like are displayed regardless of whether or not documents are stored because the functions are installed in other products.

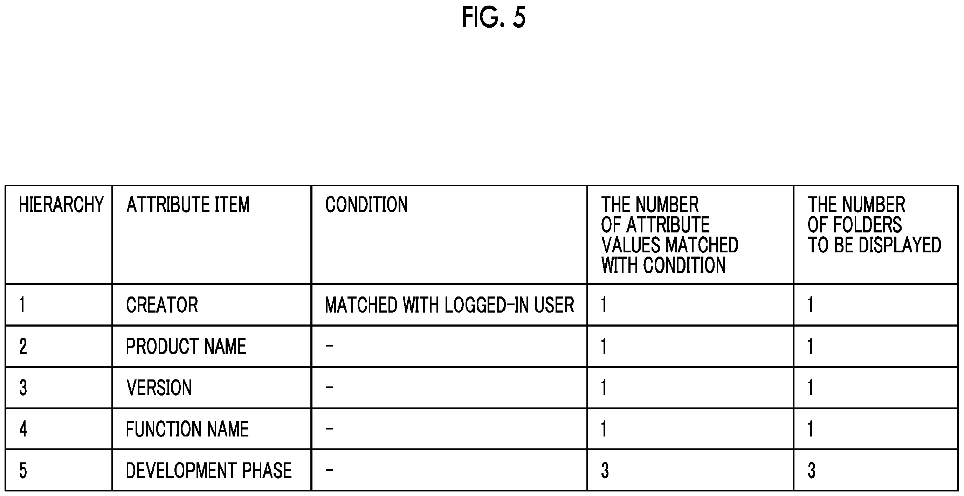

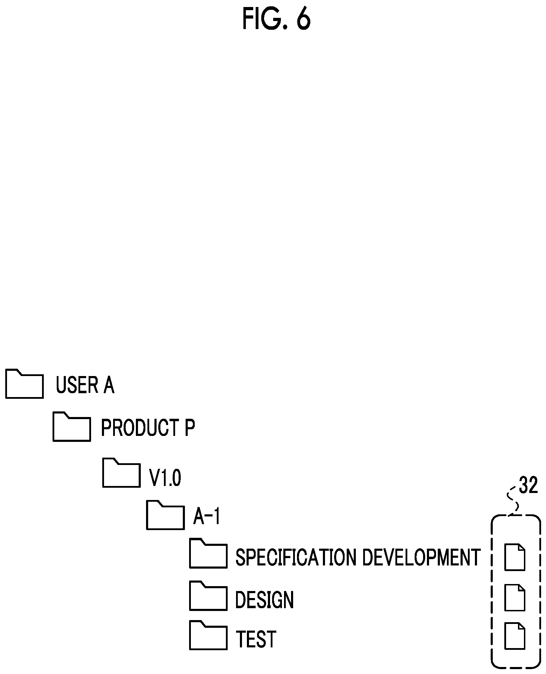

Fig. 5 is a diagram showing the same classification structure information as Fig. 3. Further, Fig. 6 is a diagram schematically showing the classification structure defined by the classification structure information shown in Fig. 5. As shown in Fig. 6, the present exemplary embodiment is characterized in that the classification structure (the above-mentioned "basic display tree") to be displayed is created by only the folders "specification", "design", and "test" in which documents are stored among the folders matched with the hierarchy and conditions set in the classification structure information and is then displayed. Strictly speaking, the folders between the top folder "user A" and the folders "specification", "design", and "test" are also set as the objects to be displayed such that a hierarchical relationship from the top folder "user A" and the folders "specification", "design", and "test" in which documents are stored is understood. In other words, it can be said that the documents are indirectly stored in the lower hierarchies below or equal to the top.

In the present exemplary embodiment, as described above, all of the folders forming the prototype classification structure are not displayed as the display tree as they are, but only the folders in which the documents are stored among the folders forming the prototype classification structure are extracted and used to create the display tree.

However, in the present exemplary embodiment, only the folder in which the document is currently stored is set as the object to be displayed. Therefore, for example, even in a case in which a new version is currently being developed and a document is planned to be created and stored in a folder in the near future, the folder is not displayed unless the document is currently stored in the folder in which the document is planned to be stored. That is, it is not possible to store a newly created document from the display tree.

Therefore, in the present exemplary embodiment, the display tree created in Step S 103 is used as the basic display tree. In a case in which there is a folder that does not have any documents stored therein, but corresponds to the attribute value matched with predetermined conditions, the folder can be exceptionally added to the basic display tree and displayed.

Therefore, as shown in Fig. 2A, the attribute type determination unit 14 determines the type of the attribute set in the classification structure information (Step S104). In the present exemplary embodiment, the types of the attribute to be determined are a date and time, a period, a phase, and other types. In the present exemplary embodiment, a case in which the attribute value of the attribute item indicates a period or a case in which the attribute value is a phrase indicating the phase is set as the predetermined condition in which the folder in which no documents are stored is set as the object to be displayed.

In the present exemplary embodiment, examples of the period include a date and time and a period. The date and time and the period can be determined by analysis using morphological analysis. Further, a dictionary may be defined in advance. For example, in a case in which the attribute value includes ""V"+ a numerical value", the attribute value is determined to be the version. Meanwhile, since the version is considered to have a start and an end over time, the version is classified into the period in the present exemplary embodiment. Alternatively, machine learning may be performed instead of using the dictionary.

Further, in the present exemplary embodiment, the phrase indicating the phase may be specified by analyzing the actual state of the creation of the document and the classification structure. Specifically, the attribute value of the attribute of the document and the storage date and time of the document in the folder are analyzed to determine whether or not the attribute value is the phrase indicating the phase. For example, the attribute value included in the classification structure and the creation date (storage date) of the document under the corresponding folder are analyzed. In a case in which the documents are stored in a predetermined order, the attribute value and attribute item of a target and an attribute item immediately above the attribute item are stored and determined as a set of attribute values indicating the phase. Specifically, in a case in which the past document creation results are analyzed and the types of documents corresponding to development are created in the order of a specification, design, and a test, it is determined that phases are formed by the documents with these three attribute values. Further, in a case in which it is found that the types of documents corresponding to a purchase contract are created in the order of a written estimate, a written contract, a state of delivery, and a written request, it is determined that the phases are formed by the documents with these four attribute values. As described above, it is determined that the phases are formed by a plurality of documents by combinations of the function names and the document types.

Meanwhile, in the present exemplary embodiment, the folders forming the phases are grouped and displayed. Therefore, in a case in which the document is stored in at least one folder among the folders forming the phases, a set of all of the folders forming the phases is set as the object to be displayed.

In a case in which the type of the attribute set in the classification structure information is determined as described above, the display tree creation unit 16 repeats the following process in descending order of the hierarchy of the classification structure, that is, in the order of hierarchy 1, hierarchy 2, ..., hierarchy 5 (Step S105).

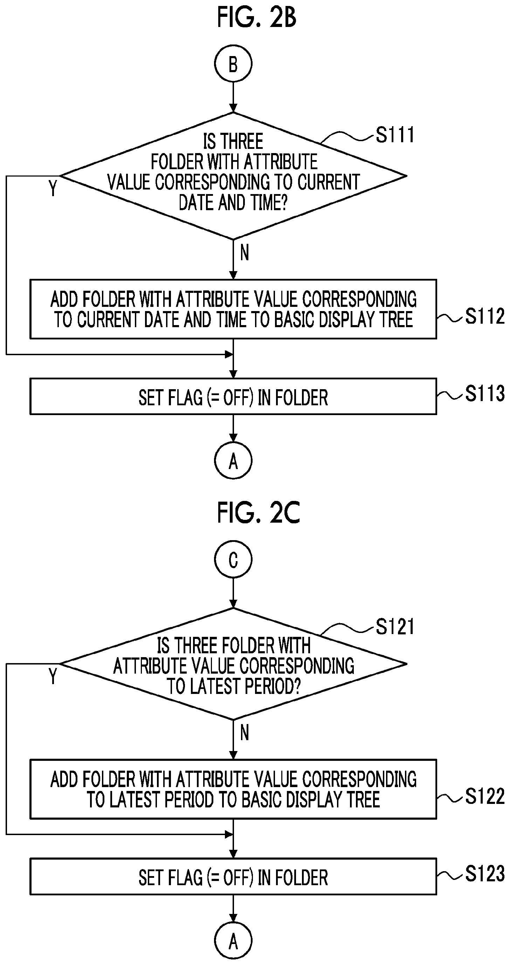

First, in a case in which the attribute corresponding to the hierarchy to be processed indicates the date and time (Y in Step S106), the display tree creation unit 16 checks whether or not a folder with an attribute value corresponding to the current date and time is included in the basic display tree as shown in Fig. 2B. It is possible to check whether or not the folder has the attribute value corresponding to the current date and time with reference to the prototype classification structure or by comparison with the current time. In a case in which the folder is not included (N in Step S111), the display tree creation unit 16 adds the folder with the attribute value corresponding to the current date and time to the basic display tree (Step S112). In a case in which the folder is included (Y in Step S111), it is not necessary to add the folder. Then, the display tree creation unit 16 sets a flag having off as an initial value in the folder (Step S113). This flag will be described below.

Further, in a case in which the attribute corresponding to the hierarchy to be processed does not indicate the date and time (N in Step S106) and indicates the period (Y in Step S107), the display tree creation unit 16 checks whether or not a folder having an attribute value corresponding to the latest period is included in the basic display tree as shown in Fig. 2C. It is possible to check whether or not the folder has the attribute value corresponding to the latest period with reference to the prototype classification structure. In a case in which the folder is not included (N in Step S121), the display tree creation unit 16 adds the folder with the attribute value corresponding to the latest period to the basic display tree (Step S122). In a case in which the folder is included (Y in Step S121), it is not necessary to add the folder. Then, the display tree creation unit 16 sets a flag having off as an initial value in the folder (Step S123). This flag is the same as the flag set in Step S113.

Then, in a case in which the attribute corresponding to the hierarchy to be processed does not indicate the period (N in Step S107) and indicates the phase (Y in Step S108), the display tree creation unit 16 sets the folder with the attribute value and adds the folder to the basic display tree (Step S109).

In a case in which the attribute corresponding to the hierarchy to be processed does not indicate any of the date and time, the period, and the phase (N in Step S108), it is assumed that there is no folder to be added.

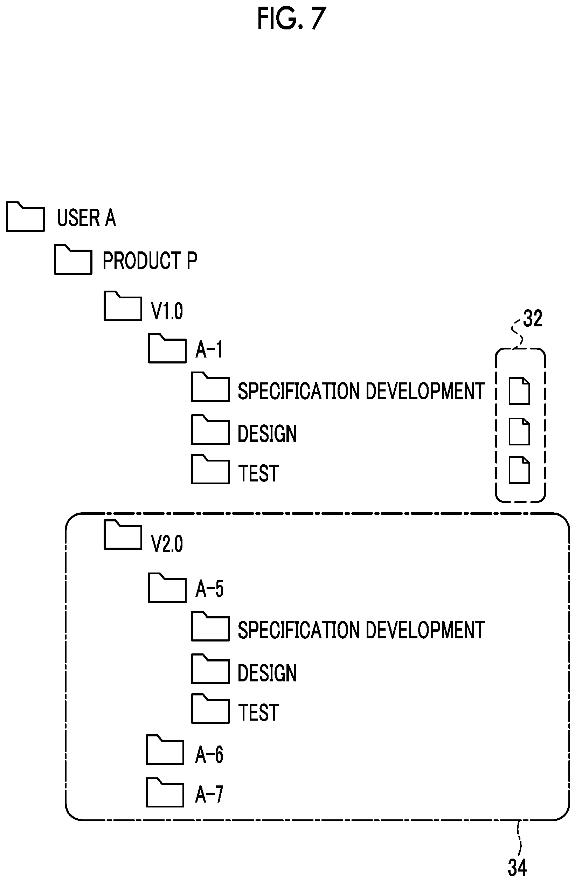

Fig. 7 is a diagram showing an example of the display of the display tree. Focusing on a display region 34 in the example of the display shown in Fig. 7, a document has not yet been stored in the version "V2.0" indicating the period. Therefore, the version "V2.0" is originally excluded from the object to be displayed. However, since the version "V2.0" is the latest period, the display tree creation unit 16 exceptionally sets the version "V2.0" as the object to be displayed as described above.

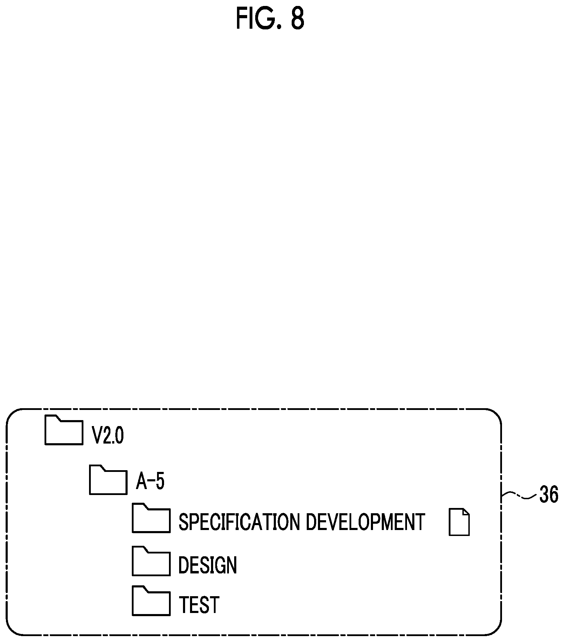

Further, Fig. 8 is a diagram showing a part of the display tree. In a case in which a document is stored only in the "specification development" as in the display region 36 shown in Fig. 8, the "design" and the "test" are originally excluded from the objects to be displayed. However, since the phases are configured by three attribute values "specification development", "design", and "test", the display tree creation unit 16 exceptionally sets a set of the folders corresponding to these attribute values as the object to be displayed.

As shown in Figs. 7 and 8, the above process makes it possible to easily predict that documents will be stored in the folders which do not have documents stored therein, but correspond to the current date and time and the latest period and in the folders that form the phases in the near future. For example, after the specifications are created, a design document needs be created. Therefore, the folders forming the phases are grouped together and displayed first. As described above, in the present exemplary embodiment, the display tree creation unit 16 exceptionally includes the folder, in which no documents are stored, in the object to be displayed, considering the user's convenience.

Here, the flags set in the folders in Steps S 113 and S 123 will be described.

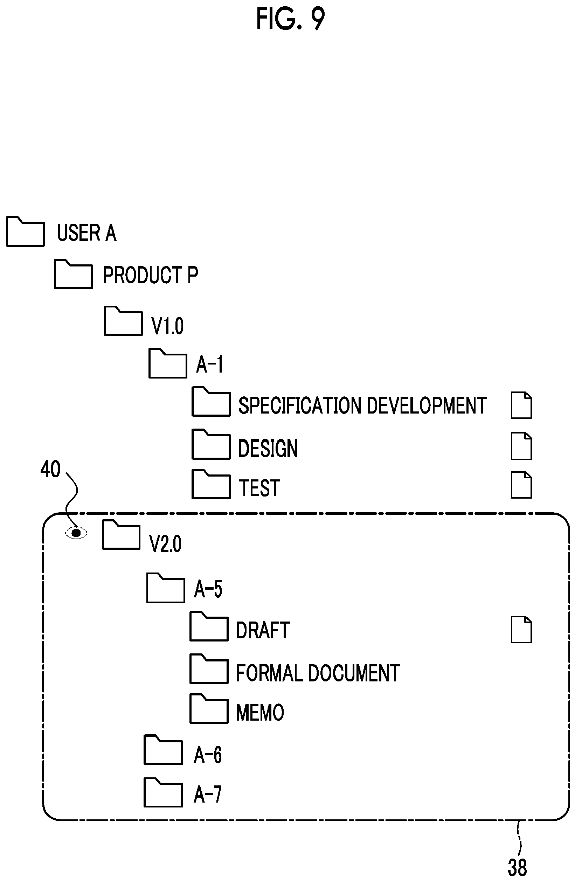

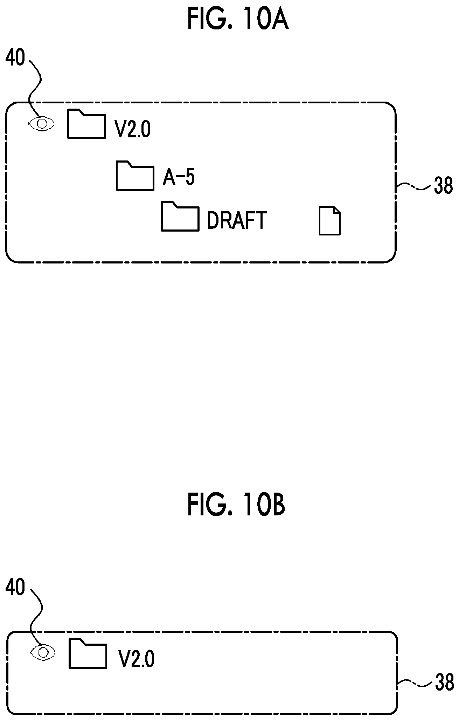

Fig. 9 and Figs. 10A and 10B are diagrams showing examples of the display tree. Of these, Fig. 9 shows an example of display in a case in which the flag is in an OFF (clear) state, and Figs. 10A and 10B show examples of display in a case in which the flag is in an ON (set) state. In addition, the flag will be described with a focus on the content of display in a display region 38 surrounded by a one-dot chain line in the display tree. Therefore, in Figs. 10A and 10B, a display portion other than the display region 38 is omitted for convenience. In addition, "draft", "formal document", and "memo" are attribute values that do not constitute the phases.

The display tree creation unit 16 according to the present exemplary embodiment displays an icon 40 with an eye shape as a display element for switching the display of a subfolder in association with a folder to be subjected to display control using the flag. The icon 40 is associated with the folder (the version in the example of the display shown in Fig. 9) in which the attribute value of the attribute item of the document indicates the period. The user can perform an operation of selecting the icon 40 to switch the flag between the ON and OFF states. In the present exemplary embodiment, a case in which the icon 40 is displayed in the state of a black eye as shown in Fig. 9 indicates that the flag is in the OFF state. On the other hand, a case in which the icon 40 is displayed in the state of a white eye as shown in Figs. 10A and 10B indicates that the flag is in the ON state.

In the present exemplary embodiment, the basic form is to perform control such that only the folder in which a document is stored is displayed. However, as shown in Fig. 9, in a case in which the icon 40 corresponding to the version "V2.0" is set to the OFF state, the display control unit 20 also sets, as the objects to be displayed, the subfolders of the version "V2.0", particularly, the folder in which no documents are stored.

On the other hand, as shown in Figs. 10A and 10B, in a case in which the flag is set to the ON state, the display control unit 20 sets, as the object to be displayed, the folder "draft" in which the document is stored among the subfolders of the version "V2.0" and does not display the folders in which no documents are stored, as shown in Fig. 10A. In addition, the folders corresponding to the attribute values forming the phases may be set as the objects to be displayed even in a case in which no documents are stored in the folders.

In addition, Fig. 10B shows an example of display in a case in which documents are not stored in any of the folder "V2.0" and the subfolders of the folder "V2.0". As shown in Fig. 10B, since documents are not stored in any of the subfolders of the folder "V2.0", the subfolders are excluded from the objects to be displayed. In addition, since the folder "V2.0" corresponds to the latest period, the folder "V2.0" is set as the object to be displayed.

As described above, in the present exemplary embodiment, basically, only the folder in which a document is stored is set as the object to be displayed. Therefore, a case in which the folder in which a document should not be stored is set as the object to be displayed means that the document is stored in a wrong folder. According to the present exemplary embodiment, it is possible to notify the user of the error in the storage destination.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Note)

(((1))) An information processing system comprising:
   a processor configured to:
   in a case in which a request to display a classification structure for classifying document files into folders that are hierarchically formed on the basis of attribute items of the document files is received, specify a folder in which the document file is stored with reference to attribute information of the document files stored in the folders forming the classification structure; and
   display only the folder in which the document file is stored among the folders forming the classification structure.
(((2))) The information processing system according to (((1))), wherein the processor is configured to:
   display a folder that does not have the document file stored therein, but corresponds to an attribute value matched with a predetermined condition.
(((3))) The information processing system according to (((2))),
   wherein the predetermined condition is that the attribute value of the attribute item of the document file indicates a period.
(((4))) The information processing system according to (((2))),
   wherein the predetermined condition is that the attribute value of the attribute item of the document file is a phrase indicating a phase.
(((5))) The information processing system according to (((4))), wherein the processor is configured to:
   analyze the attribute value of the attribute item of the document file stored in the folder forming the classification structure and a storage date and time of the document file in the folder to determine whether or not the attribute value is the phrase indicating the phase.
(((6))) The information processing system according to any one of (((1))) to (((5))), wherein the processor is configured to:
   in a case in which the attribute value of the attribute item of the document file indicates the period, display a display element for switching display of a subfolder of a folder that corresponds to an attribute value indicating a latest period among the attribute values of the attribute items in association with the folder.
(((7))) The information processing system according to (((6))), wherein the processor is configured to:
   display the subfolder of the folder corresponding to the attribute value indicating the latest period in response to a user's operation of selecting the display element.
(((8))) The information processing system according to (((7))), wherein the processor is configured to:
   in a case in which the document file is not stored in the subfolder, exclude the subfolder from an object to be displayed.
(((9))) The information processing system according to (((6))), wherein the processor is configured not to:
   display the subfolder of the folder corresponding to the attribute value indicating the latest period in response to a user's operation of selecting the display element.
(((10))) A program causing a computer to implement:
   a function of specifying a folder in which the document file is stored with reference to attribute information of the document files stored in the folders forming the classification structure, in a case in which a request to display a classification structure for classifying document files into folders that are hierarchically formed on the basis of attribute items of the document files is received; and
   a function of displaying only the folder in which the document file is stored among the folders forming the classification structure.

According to the aspect (((1))), in a case in which the classification structure for classifying the document files into the folders that are hierarchically formed on the basis of the attribute items of the document files is displayed, it is possible to easily control the display of useless folders as compared to a case in which the user manually sets folders.

According to the aspect (((2))), it is possible to set, as the object to be displayed, the folder that does not have the document file stored therein, but is considered to be necessary for the user.

According to the aspect (((3))), it is possible to display the folder corresponding to the latest attribute value.

According to the aspect (((4))), it is possible to collectively display the folders corresponding to the phase.

According to the aspect (((5))), it is possible to automatically determine whether or not the phrase indicates the phase.

According to the aspect (((6))), only the selection of the display element by the user makes it possible to switch between the display and non-display of the subfolder of the folder that corresponds to the attribute value indicating the latest period.

According to the aspect (((7))), it is possible to display the subfolder of the folder that corresponds to the attribute value indicating the latest period regardless of whether or not the document file is stored.

According to the aspect (((8))), among the subfolders of the folder that corresponds to the attribute value indicating the latest period, it is possible not to display the subfolder in which the document file is not stored.

According to the aspect (((9))), it is possible not to display the subfolder of the folder that corresponds to the latest attribute value.

According to the aspect (((10))), in a case in which the classification structure for classifying the document files into the folders that are hierarchically formed on the basis of the attribute items of the document files is displayed, it is possible to easily control the display of useless folders as compared to a case in which the user manually sets folders.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing apparatus
12: document management unit
14: attribute type determination unit
16: display tree creation unit
18: user interface (UI) unit
20: display control unit
22: receiving unit
24: control unit
26: document storage unit
28: classification structure information storage unit

## Claims

1. An information processing system comprising:
a processor configured to:
in a case in which a request to display a classification structure for classifying document files into folders that are hierarchically formed on the basis of attribute items of the document files is received, specify a folder in which the document file is stored with reference to attribute information of the document files stored in the folders forming the classification structure; and
display only the folder in which the document file is stored among the folders forming the classification structure.

2. The information processing system according to claim 1, wherein the processor is configured to:
display a folder that does not have the document file stored therein, but corresponds to an attribute value matched with a predetermined condition.

3. The information processing system according to claim 2,
wherein the predetermined condition is that the attribute value of the attribute item of the document file indicates a period.

4. The information processing system according to claim 2,
wherein the predetermined condition is that the attribute value of the attribute item of the document file is a phrase indicating a phase.

5. The information processing system according to claim 4, wherein the processor is configured to:
analyze the attribute value of the attribute item of the document file stored in the folder forming the classification structure and a storage date and time of the document file in the folder to determine whether or not the attribute value is the phrase indicating the phase.

6. The information processing system according to any one of claims 1 to 5, wherein the processor is configured to:
in a case in which the attribute value of the attribute item of the document file indicates the period, display a display element for switching display of a subfolder of a folder that corresponds to an attribute value indicating a latest period among the attribute values of the attribute items in association with the folder.

7. The information processing system according to claim 6, wherein the processor is configured to:
display the subfolder of the folder corresponding to the attribute value indicating the latest period in response to a user's operation of selecting the display element.

8. The information processing system according to claim 7, wherein the processor is configured to:
in a case in which the document file is not stored in the subfolder, exclude the subfolder from an object to be displayed.

9. The information processing system according to claim 6, wherein the processor is configured not to:
display the subfolder of the folder corresponding to the attribute value indicating the latest period in response to a user's operation of selecting the display element.

10. A program causing a computer to implement:
a function of specifying a folder in which the document file is stored with reference to attribute information of the document files stored in the folders forming the classification structure, in a case in which a request to display a classification structure for classifying document files into folders that are hierarchically formed on the basis of attribute items of the document files is received; and
a function of displaying only the folder in which the document file is stored among the folders forming the classification structure.

11. An information processing method comprising:
specifying a folder in which the document file is stored with reference to attribute information of the document files stored in the folders forming the classification structure, in a case in which a request to display a classification structure for classifying document files into folders that are hierarchically formed on the basis of attribute items of the document files is received; and
displaying only the folder in which the document file is stored among the folders forming the classification structure.
